# EUROPEAN PATENT APPLICATION

(11) **EP 4 715 143 A1**
(43) Date of publication of application: **25.03.2026**
(21) Application number: 24382995.9
(22) Date of filing: 19.09.2024
(51) Int. Cl.: E04H 12/34, F03D 13/10, F03D 13/20

(54) **ASSEMBLY STAND AND METHOD FOR ASSEMBLING CONCRETE SEGMENTS INTO A CONCRETE RING**

(71) Applicant: Siemens Gamesa Renewable Energy Innovation & Technology S.L., 31621 Sarriguren (Navarra) (ES)
(72) Inventor: Barquero Perez De Albeniz, Oscar, 31180 ZIZUR MAYOR (ES)
(74) Representative: SGRE-Association

(57) **Abstract**

An assembly stand (1) and associated method for assembling a concrete ring (11) from a plurality of concrete segments (10), the assembly stand (1) comprising a plurality of beams (2) configured to support the concrete segments during their assembly into the concrete ring, in particular the beams mounted with a star configuration from the central axis, a movement mechanism (3) mounted on one or of more of the plurality of beams (2), in particular mounted on all beams (2), wherein each movement mechanism (3) is configured to contact or engage with an underside of the concrete segments (10) and to allow a controlled movement of the concrete segments (10) relative to the beam (2) when an assembly force (F) is applied.

## Description

### FIELD OF THE INVENTION

The present invention relates to the field of construction and assembly of large-scale structures, in particular to an assembly stand and method for assembling concrete segments into a concrete ring. The present invention is further related to an alignment frame to aid in the positioning and alignment of the mentioned assembly stand.

### BACKGROUND OF THE INVENTION

In the construction of large-scale structures, such as wind turbine towers and storage tanks, the assembly of concrete segments into a precise circular ring is a critical process. Traditionally, this assembly has been accomplished using various methods and tools designed to align and secure the segments. One common approach involves the use of cranes to lift and position the concrete segments, followed by manual adjustment and alignment using wedges, shims, or temporary supports. These methods, while functional, often result in time-consuming and labor-intensive processes that are prone to errors.

Additionally, the alignment of concrete segments, particularly in frustoconical structures like typical concrete towers, presents a significant challenge. The varying diameters of the segments require precise positioning to ensure structural integrity and avoid gaps at the joint interfaces. Conventional methods may involve using basic alignment frames or jigs that are cumbersome to set up and lack the precision required for modern construction standards.

Furthermore, the application of force to close gaps between segments typically relies on simple mechanical devices or manual labor, which can lead to inconsistent results and increased assembly time. These traditional methods often do not provide the necessary, precision control and/or flexibility needed to accommodate the unique challenges posed by large and heavy concrete segments, such as wind turbine concrete towers.

The limitations of these known solutions-such as imprecise alignment, difficulty in handling varying segment sizes, and inefficient force application-underscore the need for a more efficient, precise, reliable, and flexible approach to the assembly of concrete rings.

### SUMMARY OF THE INVENTION

This need may be met by the subject matter according to the independent claims. Advantageous embodiments of the present invention are described by the dependent claims. Features of different claim categories may be combined as appropriate to give further embodiments which may not be explicitly described herein.

In accordance with the invention there is provided an assembly stand and associated method for assembling concrete segments into a concrete ring. This assembly process is particularly relevant in the construction of large-scale circular structures, including but not limited to wind turbine frustoconical towers, and other substantial concrete formations such as storage tanks or the like. More in particular, the invention addresses challenges related to the alignment, positioning, and/or securing of heavy concrete segments, facilitating the formation of a precisely assembled concrete ring, in particular of a plurality of concrete rings of different diameters using the same assembly stand.

According to a first aspect of the invention, there is provided an assembly stand, which comprises a plurality of beams configured to support the concrete segments during their assembly into a concrete ring. Each beam may be configured to bear the load of a concrete segment while allowing for precise adjustments during the assembly process.

The beams may be arranged in a radial configuration around a central axis, ensuring that each beam extends outward symmetrically from the center.

In some embodiments, the beams may be arranged in a star configuration, where each beam is equidistantly spaced from adjacent beams. This specific arrangement not only enhances the stability of the assembly process but also optimizes the alignment of the concrete segments. Additionally, the radial arrangement can be configured such that the number of beams corresponds to twice the number of concrete segments. For instance, six beams may be arranged to support three concrete segments, ensuring that each segment is supported by a pair of adjacent beams.

In some embodiments, the assembly stand comprises a movement mechanism mounted on one or of more of the plurality of beams, in particular mounted on all beams, wherein each movement mechanism is configured to contact or engage with an underside of the concrete segments and to allow a controlled movement of the concrete segments relative to the beam when an assembly force is applied.

The assembly force may by essentially on the horizontal direction to allow a horizontal movement of the concrete segment with respect to the beam by means of the movement mechanism.

In addition, or as an alternative to the above, the assembly force may by a vertical force, for example by means of a tool integrated or external to the movement mechanism, which allows a vertical movement of the concrete segment with respect to the beam.

More in particular, the movement mechanism may be a sliding pad.

More specifically, in an embodiment, each movement mechanism mounted on the one or of more of the plurality of beams may comprise:
a first portion configured to be connected to the beam; and
a second portion configured to engage with or contact a underside of a concrete segment,
wherein the first and second portions are configured to move relative to each other.

In other words, the first and second portions may be configured to move relative to each other in the horizontal/longitudinal plane, in particular by a low friction interface.

In some embodiments, the first and second portions are configured to move relative to each other in the vertical plane and/or in the horizontal/longitudinal plane. In an embodiment, the first and second portions are configured to move relative to each other in both the vertical plane and in the horizontal/longitudinal plane, allowing great precision and flexibility for alignment.

The low-friction interface may include surfaces arranged on each first and second portion, where the surfaces are configured to slide with each other, in particular where the surfaces are made of Polytetrafluoroethylene (PTFE). This may allow the relative movement along the horizontal/longitudinal plane.

In some embodiments, the first portion and second portion may be equipped with a vertical adjustment mechanism, which allows the second portion to move vertically relative to the first portion or vice versa.

This mechanism may be based on a ratchet wrench. For example, the ratchet wrench may be connected to a threaded shaft positioned between the first portion and the second portion. The threaded shaft may be vertically oriented and may engage with a threaded hole in either the first or second portion. When the ratchet wrench is operated, it may rotate the threaded shaft, causing the first or second portion to move vertically either upwards or downwards, depending on the direction of rotation. This may provide precise control over the vertical positioning of the concrete segment supported by the second portion.

To adjust the height of the concrete segment, the operator may use the ratchet wrench to engage the vertical adjustment mechanism. For example, the rotation of the threaded shaft may result in a smooth vertical movement of the second portion, allowing the concrete segment to be raised or lowered as needed. The ratchet mechanism may ensure that the adjustment is incremental and controlled, preventing sudden movements or misalignment.

By optionally incorporating both the low-friction horizontal movement and the vertical adjustment mechanism, this embodiment allows for precise control of the concrete segments during the assembly process, ensuring a good fit of the concrete ring.

In an embodiment, the movement mechanism may be a sliding pad configured to contact the underside of the concrete segments, where each sliding pad is configured to allow a controlled sliding movement of the concrete segments relative to the beam when an assembly force is applied.

The sliding pads themselves may also comprise the two mentioned portions, namely, a first portion connected or fixed to the beam and a second portion that engages or contacts the underside of the concrete segment. These two portions are configured to move relative to each other via a low-friction interface, which may include surfaces made of PTFE (Teflon). The low-friction interface ensures smooth and controlled sliding movement, allowing for precise adjustments during the assembly process.

More in particular, the sliding pads allow movement in multiple directions, including rotational adjustments, which greatly facilitates the alignment of concrete segments during the assembly process. The ability to move the sliding pads horizontally and make minor rotational adjustments helps ensure that the segments fit and close the gap at the interfaces more easily, reducing the time and effort required for precise alignment and enhancing precision.

In some embodiments, the sliding pads are made of low-friction materials, such as Teflon, which further aids in the smooth movement of the concrete segments. By minimizing resistance during adjustment, these pads contribute to a more efficient assembly process.

Alternatively, the movement mechanism may include other forms of movement facilitation beyond sliding. For example, in some embodiments, the movement mechanism may be a rolling mechanism, such as a set of rollers or wheels, which are configured to allow the concrete segments to roll along the beam when an assembly force is applied. This configuration enables smooth movement while maintaining control over the alignment of the segments. Other possible solutions may involve adjustable guiding systems mounted on the beams, or a pivoted system mounted on the beam.

It should be understood that the movement mechanism is not limited to the specific embodiments mentioned above and may include any other mechanism or structure that facilitates the controlled movement of the concrete segments relative to the beams during assembly.

In an embodiment, the assembly stand may further include a dual beam arrangement at the joint interfaces between adjacent concrete segments. The dual beam arrangement may comprise two beams placed adjacently positioned side by side. Each beam in the dual beam arrangement supports may comprise a movement mechanism, such as a sliding pad, allowing for independent movement (e.g. By facilitating a sliding movement) and precise alignment of the segments at the joint interfaces. This dual beam arrangement is particularly beneficial for aligning the concrete segments at the joint interfaces, facilitating that the segments fit together reducing the vertical gaps, in such a way that two concrete segments may move independent, each supported with a corresponding individual beam and corresponding movement mechanism or sliding pad, without having to share a single movement mechanism or sliding pad in a single beam for two adjacent concrete segments at the joint interface, which might complicate the positioning and alignment tasks.

A set of sliding pads may be mounted on the beams of the dual beam arrangement. Each sliding pad may be configured to contact the underside of a respective concrete segment, facilitating its movement along the corresponding beam by allowing a sliding movement relative to the beam. Therefore, each concrete segment being assembled at the contact interface comprising its own sliding pad.

Furthermore, in some embodiments, the assembly stand may further comprise a force application mechanism configured to apply a controlled force to close any gaps at the joint interfaces between adjacent concrete segments. This mechanism, which may be hydraulic, pneumatic, or mechanical, such as a bottle jack, ensures that the segments are securely and tightly aligned during assembly.

For example, the force application mechanism is typically positioned on a beam supporting a concrete segment, away from the joint interface, to exert an inward force towards the central axis of the ring being assembled, allowing two adjacent concrete segments to be pushed together closing the gap.

In some embodiments, the force application mechanism operates in conjunction with a stop element. This stop element, which can be connected to a beam, provides a reactive surface against which the force application mechanism can exert force. This setup ensures that the applied force is directed accurately and effectively, facilitating the closure of any gaps between the segments.

In yet a further embodiment, the beams may include a series of positioning points, such as holes or slots, for securing the movement mechanism (e.g., sliding pads) at various positions along the longitudinal axis of the beam. This feature allows for flexible adjustment of the movement mechanism to accommodate concrete segments of different sizes and shapes. This flexibility is particularly advantageous in assembling typical concrete towers, which are often frustoconical in shape, requiring the assembly of segments with varying diameters, even within a single tower. The positioning points may be marked or related to a each of the required segment's diameter.

The positioning points can also be used to secure the stop element on the beam, as well as other components, such as the force application mechanism, at different positions along the beam's length. These components can be secured using standard mechanical tools directly on-site, greatly enhancing the ease of assembling both the stand and the concrete segments.

In a second aspect of the invention, there is provided an alignment frame for assisting in the precise positioning of the beams of the stand assembly in any of the embodiments aforementioned. The alignment frame may be configured to be aligned with the central axis of the concrete ring to be assembled and comprises a plurality of faces arranged symmetrically around the central axis. These faces are configured to align with the corresponding beams, ensuring that each beam is correctly positioned during the assembly process. This alignment frame greatly facilitates the work for the personnel in charge.

The alignment frame may form a polygonal shape, such as a hexagon or octagon, to match the intended configuration of the ring. In some embodiments, the alignment frame is designed to be assembled from multiple pieces, allowing for easy disassembly and reassembly. This modular design is particularly advantageous for transportation and storage.

Additionally, the alignment frame may include positioning elements associated with its faces. These elements guide and/or receive the end portions of the beams, facilitating their proper alignment and positioning. This positioning elements may be tabs or appendices which receive the beams at a determined angle/position to facilitate the exact alignment from the center point.

In third aspect of the invention, it is further provided a method of assembling a concrete ring using the described assembly stand and, optionally, also the alignment frame.

The method may involves positioning the beams radially extending from the central axis, with each beam configured to support a concrete segment during assembly. The concrete segments are placed onto the sliding pads mounted on the beams, and their positions are adjusted by sliding them along the respective beams to bring adjacent segments into alignment.

In some embodiments, the method includes the use of a central frame or alignment frame to ensure that the beams are correctly aligned with the central axis of the ring. The alignment frame, with its symmetrically arranged faces, guides the positioning of the beams, ensuring that each segment is properly aligned as it is assembled into the ring.

The method further includes the step of applying an assembly force to close any gaps at the joint interfaces between the segments, ensuring that the ring is securely formed. This step may involve the use of the force application mechanism in conjunction with the stop element to exert inward force towards the central axis. Finally, the segments may be secured in place, with attaching means, completing the assembly of the concrete ring.

In summary, the invention provides a comprehensive solution for assembling concrete rings with precision and stability. The assembly stand, sliding pads, dual beam system, force application mechanism, and alignment framework together to ensure that the concrete segments are aligned, positioned, and secured correctly during assembly. The method of assembly further outlines the steps involved in using these components to form a concrete ring from multiple concrete segments.

The assembly stand, alignment frame, and associated components offer significant advantages in the construction of large-scale circular structures. The invention is particularly well-suited for applications where the precise alignment and secure connection of heavy concrete segments are critical, such as in the construction of wind turbine bases, storage tanks, and other similar structures.

The modular design of the components, including the alignment frame and sliding pads, provides flexibility in accommodating various segment sizes and shapes. The use of low-friction materials and precise positioning elements ensures that the assembly process is smooth and efficient, reducing the risk of errors and misalignments.

Overall, the invention provides a comprehensive solution for assembling concrete rings with precision, stability, and efficiency. The various embodiments and optional features described allow for a customizable approach that can be tailored to the specific needs of different construction scenarios, making this invention a valuable tool in the field of construction.

Moreover, the assembly stand according to any embodiment of the present invention, and its associated methods and alignment frame, is driven by the need for a significantly higher level of precision than what is typically required in conventional concrete tower construction.

As the demand for taller and more structurally efficient concrete towers increases, the tolerances for misalignment or error during the assembly process must be minimized. This assembly stand ensures that even the slightest variations in segment placement may be accounted for, allowing for precise alignment and fitment of the concrete segments. Achieving this level of precision is important to the overall structural integrity of the tower, especially in high-performance applications such as wind turbines, where the slightest misalignment can affect the stability of the structure.

In particular, the incorporation of the movement mechanisms according to the any of embodiments aforementioned, allows the assembly stand to meet these stringent requirements, offering a solution that exceeds traditional standards.

It is noted that embodiments of the invention have been described with reference to different subject matters. Specifically, some embodiments have been described with method-type claims, while others have been described with apparatus-type claims, including the assembly stand, alignment frame, and related components. However, a person skilled in the art will understand from the above and the following description that, unless otherwise indicated, any combination of features from one type of subject matter with features from another type of subject matter, particularly combinations of features from method-type claims and apparatus-type claims, is also part of the disclosure of this document.

The aspects defined above, and further aspects of the present invention are apparent from the examples of embodiments described herein and are further explained with reference to these examples. The invention will be described in more detail hereinafter with reference to examples of embodiments. However, it is explicitly noted that the invention is not limited to the described exemplary embodiments.

### BRIEF DESCRIPTION OF THE DRAWINGS

Embodiments of the invention are now described, by way of example only, with reference to the accompanying drawings, of which:
Figure 1 shows the assembly stand equipped with beams arranged radially around a central axis and movement mechanisms mounted on the beams according to an embodiment of the invention.
Figure 2 shows the assembly stand at different stages of the assembly process as more concrete segments are mounted, including a detail view of the force application mechanism and stop element, as well as of the auxiliary lifting tool, according to an embodiment of the invention.
Figure 3 shows an upper view of the assembly ring, depicting the dual beam arrangement, the movement mechanisms and the force application device, and further illustrating the adjustment and the positioning of adjacent concrete segments at the joint interface to close the gap.
Figures 4 shows the process of assembling the assembly stand, including the positioning of the beams and the assembly of the alignment frame.

The illustration in the drawings is in schematic form. It is noted that in different figures, similar or identical elements may be provided with the same reference signs.

### DESCRIPTION OF THE DRAWINGS

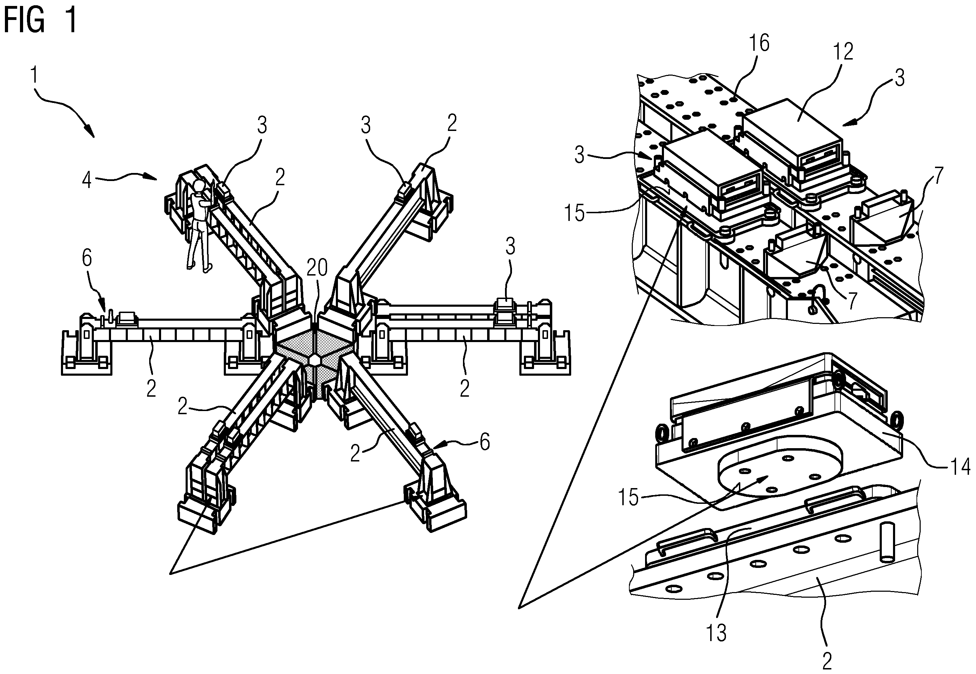

Referring to Figure 1, the present invention relates to an assembly stand (1) designed for assembling a plurality of concrete segments (10) into a concrete ring (11). The assembly stand (1) comprises several key components that work together to facilitate the precise positioning, alignment, and securing of the concrete segments (10) during the assembly process.

The assembly stand (1) includes a plurality of beams (2), which are configured to support the concrete segments (10) during their assembly into the concrete ring (11). As depicted in Figure 1, the beams (2) are arranged radially around a central axis, such that each beam (2) extends outward from the center. This radial configuration ensures that the concrete segments (10) can be assembled into a circular ring with high precision. In this particular embodiment, the beams (2) form a star configuration, where each beam (2) is spaced equidistantly from the adjacent beams, optimizing the structural support and alignment of the concrete segments (10).

Mounted on each of the beams (2) is a movement mechanism (3), which is designed to engage with the underside of the concrete segments (10). The movement mechanism (3) facilitates controlled movement of the concrete segments (10) relative to the beams (2), particularly when an assembly force is applied.

In an embodiment of the invention, the movement mechanism (3) comprises two portions: a first portion (13) fixed to the beam (2) and a second portion (14) that supports the underside of the concrete segment (10). These portions are configured to allow both horizontal movement and vertical adjustment relative to each other.

The first portion (13) and the second portion (14) are configured with low-friction surfaces (15) that allow for horizontal movement along the longitudinal axis of the beam (2). These surfaces may be made of a low-friction material, such as Polytetrafluoroethylene (PTFE), to facilitate the smooth sliding of the second portion (14) while maintaining precise control over the positioning of the concrete segment (10). The horizontal movement is particularly useful for aligning adjacent concrete segments (10) at the joint interfaces (5).

For vertical movement, the first portion (13) and second portion (14) may be equipped with a vertical adjustment mechanism, which allows the second portion (14) to move vertically relative to the first portion (13). This mechanism can be based on a ratchet wrench. For example, the ratchet wrench may connect to a threaded shaft that is positioned between the first portion (13) and the second portion (14). The threaded shaft may be vertically oriented and engages with a threaded hole in the first or second portion (13, 14). When the ratchet wrench is operated, it rotates the threaded shaft, causing the first or second portion (14) to move vertically either upwards or downwards, depending on the direction of rotation. This provides precise control over the vertical positioning of the concrete segment (10) supported by the second portion (14).

To adjust the height of the concrete segment (10), the operator may use the ratchet wrench to engage the vertical adjustment mechanism. For example, the rotation of the threaded shaft results in a smooth vertical movement of the second portion (14), allowing the concrete segment (10) to be raised or lowered as needed. The ratchet mechanism ensures that the adjustment is incremental and controlled, preventing sudden movements or misalignment.

By incorporating both the low-friction horizontal movement and the vertical adjustment mechanism, this embodiment allows for precise control of the concrete segments (10) during the assembly process to ensure a perfect fit.

In the embodiment of the invention depicted Figure 1, each movement mechanism (3) is a sliding pad (12) that allow the concrete segment (10) to slide along the beams (2) for precise positioning. Each sliding pad (12) includes the first portion (13) connected to the beam (2) and the second portion (14) configured to contact the underside of the concrete segment (10). As depicted in Figure 1, the first and second portions (13, 14) may be configured to move relative to each other (in the longitudinal/horizontal plane) via a low-friction interface, such as surfaces (15) made of Polytetrafluoroethylene (PTFE).

At the joint interfaces (5) between adjacent concrete segments (10), the assembly stand (1) comprises a dual beam arrangement (4), where two beams (2) are positioned side by side. Each beam (2) in the dual beam arrangement (4) is equipped with a movement mechanism (3), allowing independent movement of the segments (10) relative to each corresponding beam (2). This setup is particularly advantageous for aligning the segments (10) precisely at the joint interface (5), ensuring a seamless and secure connection between them.

To close any gaps at the joint interfaces (5), the assembly stand (1) includes a force application mechanism (6). This mechanism is configured to exert an assembly force inwardly towards the center of the ring (11) being assembled, as depicted in Figure 1. The force application mechanism (6) is positioned on a beam (2) supporting a concrete segment (10) that is offset from the joint interface (5), enabling the application of force to bring the segments (10) tightly together. In this embodiment, the force application mechanism (6) is a hydraulic or mechanical system, such as a bottle jack.

The force application mechanism (6) operates in conjunction with a stop element (7), which is connected to the beam (2). The stop element (7) provides a reactive surface against which the force application mechanism (6) can exert inward force. This configuration ensures that the assembly force is directed effectively to close the gap at the joint interface (5). The stop element (7) and other components, such as the force application mechanism (6), are secured to the beam (2) at various positions along its longitudinal axis, using positioning points (16), such as holes or slots.

Therefore, the assembly stand (1) is configured to be highly adjustable to different concrete segments sizes, allowing the movement mechanisms (3) and other components to be positioned along the beams (2) to accommodate concrete segments (10) of different sizes and shapes. This is particularly beneficial for assembling frustoconical structures, such as typical concrete towers, where segments (10) of varying diameters must be aligned and secured. The ability to adjust the position of the movement mechanisms (3) and secure them at various points along the beam (2) provides the necessary flexibility to achieve precise alignment.

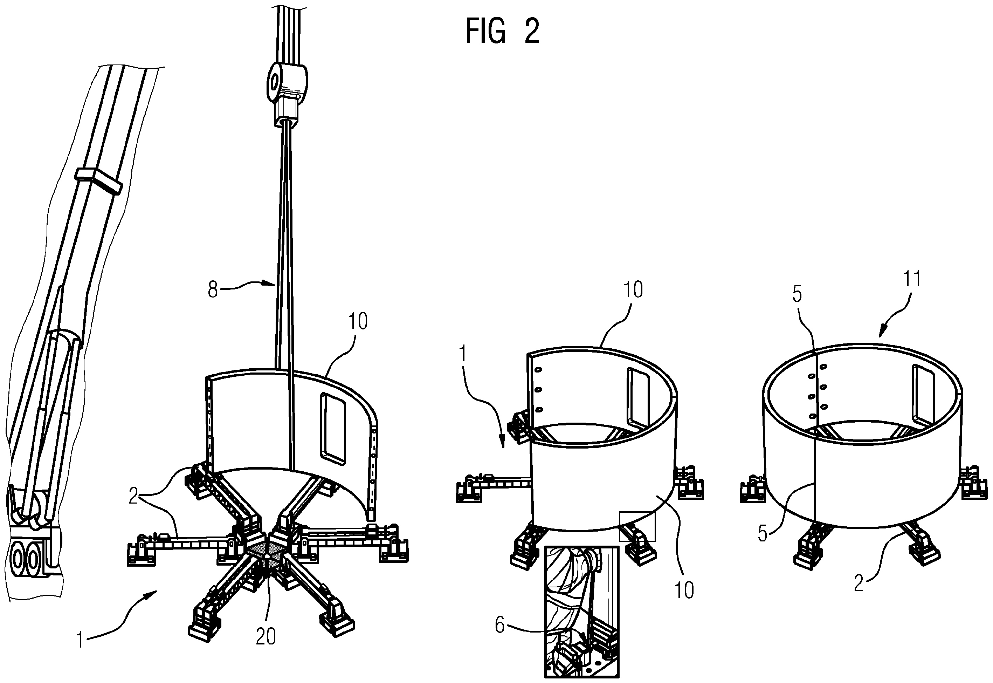

Figure 2 provides further details on the assembly stand (1) and introduces additional elements and features that enhance the assembly process of the concrete ring (11).

As depicted in Figure 2, an auxiliary lifting tool (8) is shown integrated into the assembly stand (1). This tool (8) is designed to assist in the lifting and precise placement of the concrete segments (10) onto the movement mechanisms (3) mounted on the beams (2). The Auxiliary lifting tool (8) can be configured to work in conjunction with standard lifting equipment, such as cranes, ensuring that the heavy concrete segments (10) are accurately positioned without undue strain on the assembly stand (1) or the movement mechanisms (3).

The auxiliary lifting tool (8) comprises hooks or connectors that engage with predefined attachment points on the concrete segments (10). These attachment points are strategically located to ensure balanced lifting, preventing any tilting or misalignment during placement. Once the segment (10) is positioned above the movement mechanism (3), the Auxiliary lifting tool (8) allows for a controlled lowering, ensuring that the segment (10) engages smoothly with the movement mechanism (3) without causing damage to the sliding pads (12) or other components.

Figure 2 illustrates a more detailed view of the interaction between the force application mechanism (6) and the stop element (7). In this embodiment being depicted, the force application mechanism (6) is illustrated as a hydraulic system, specifically a bottle jack, which is mounted on the beam (2). The bottle jack is configured to exert a precise and controlled force inwardly towards the center of the concrete ring (11) being assembled. This force is essential for closing gaps at the joint interfaces (5) between adjacent concrete segments (10).

The stop element (7) is securely attached to the beam (2) at a location offset from the joint interface (5), as shown in Figure 2. The positioning of the stop element (7) provides a reactive surface against which the force application mechanism (6) can exert force. This setup ensures that the applied force is directed specifically towards bringing the concrete segments (10) together, minimizing any risk of misalignment or damage.

Further illustrated in Figure 2 are the positioning points (16) along the beams (2). These positioning points (16), which may take the form of holes or slots, allow for the adjustable positioning of the movement mechanisms (3), stop elements (7), and force application mechanisms (6). The flexibility provided by these positioning points (16) is particularly advantageous when assembling concrete segments (10) of varying sizes, as it allows the user to optimize the placement of the components to suit the specific dimensions and alignment requirements of each segment (10).

The adjustable nature of these components also facilitates on-site customization of the assembly stand (1), enabling it to be adapted for different projects or varying conditions without the need for extensive reconfiguration. This adaptability is a significant benefit in large-scale construction projects where precision and efficiency are critical.

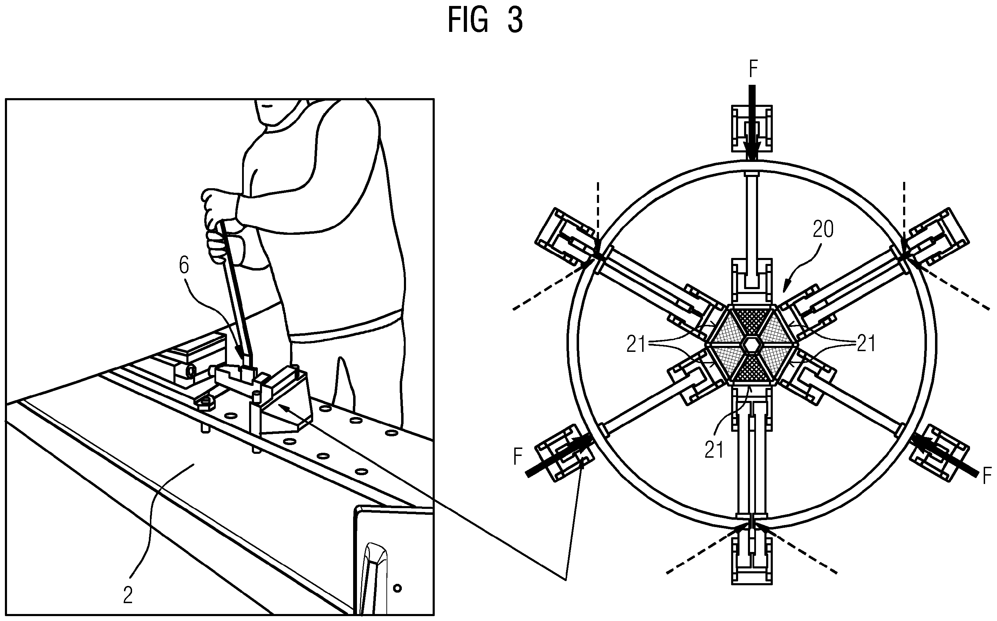

As shown in Figure 3, the dual beam arrangement (4) is depicted in greater detail, highlighting the placement and interaction of the two beams (2) positioned side by side at the joint interface (5) between adjacent concrete segments (10). This dual beam arrangement (4) is critical for ensuring independent support and movement of each concrete segment (10), particularly when precise alignment is required at the joint interface (5).

In this embodiment, each beam (2) in the dual beam arrangement (4) is equipped with its own movement mechanism (3), which, as described earlier, can include sliding pads (12) or other movement facilitation devices. The independent nature of the movement mechanisms (3) on each beam (2) allows for fine-tuned adjustments, ensuring that each concrete segment (10) can be aligned independently of its adjacent segment. This independence is crucial when working with segments of varying sizes or shapes, as it prevents one segment's alignment process from affecting the other.

Figure 3 also illustrates the face-to-face orientation of the concrete segments (10) at the joint interface (5). The precise alignment of these faces is essential for forming a seamless concrete ring (11) with no gaps or misalignments. The dual beam arrangement (4), combined with the movement mechanisms (3), ensures that the faces of adjacent segments (10) are brought together with the necessary accuracy.

Further, Figure 3 highlights the interaction between the dual beam arrangement (4) and the force application mechanism (6). In this embodiment, the force application mechanism (6) is positioned on one of the beams (2) in the dual beam arrangement (4), exerting an inward force towards the center of the concrete ring (11) to close any gaps at the joint interface (5).

The stop element (7), also depicted in Figure 3, is positioned on the same beam (2) as the force application mechanism (6). This setup ensures that the force is applied efficiently and directly to the joint interface (5), facilitating the secure connection of the concrete segments (10). The placement of the stop element (7) on one beam (2) and the application of force via the other beam (2) in the dual arrangement (4) allows for precise control over the alignment process.

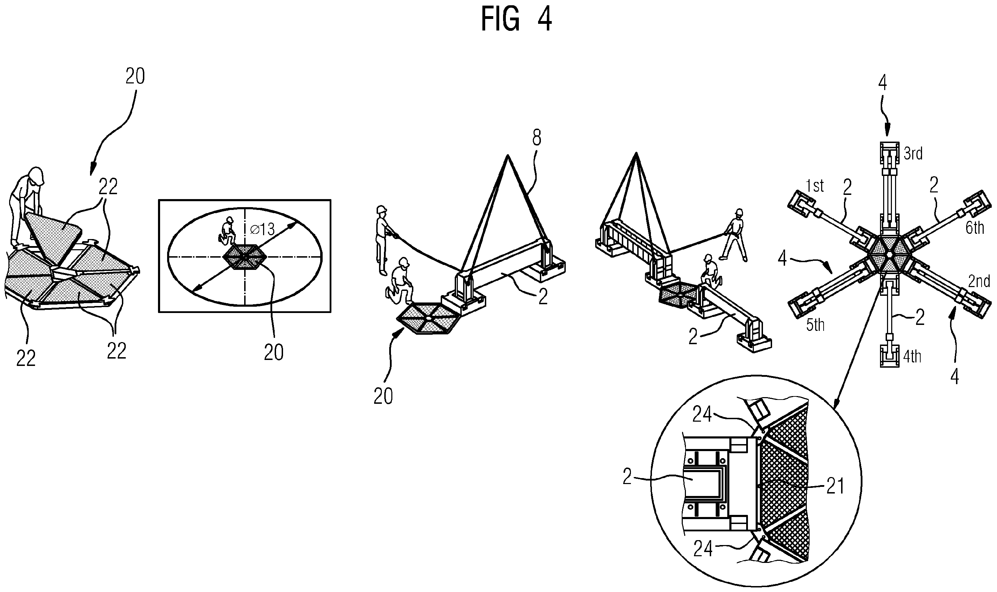

Finally, Figure 3 shows the auxiliary lifting tool (8) in use, demonstrating how it assists in the placement of the concrete segments (10) onto the dual beam arrangement (4). Figure 4 illustrates the process of assembling the assembly stand (1), focusing on a preferred sequence and method for positioning the beams (2) and the alignment frame (20). This figure provides a detailed look at how the assembly stand (1) is mounted to ensure a quick mounting and at the same time a precise setup for the subsequent assembly of the concrete ring (11).

According to the embodiment of Figure 4, the method of assembling the concrete ring (11) begins with the setup of the alignment frame (20). The process starts by assembling the parts (22) of the alignment frame (20). The alignment frame (20) is constructed from multiple pieces (22), which are connected to form a polygonal shape, such as a hexagon or octagon. Once assembled, the alignment frame (20) is positioned and aligned with the central axis of the ring (11) to be constructed. The alignment frame (20) comprises a plurality of faces (21) arranged symmetrically around this axis, with each face (21) designed to guide the correct placement of the beams (2).

After the alignment frame (20) is assembled and positioned, the beams (2) are placed radially around the central axis, using the faces (21) of the alignment frame (20) as guides.

Preferably, as depicted in Figure 4, after the alignment frame (20) is assembled and positioned, the beams (2) are installed in a specific sequence to ensure structural balance and precise alignment. The process begins with positioning the first beam (1st), followed by the placement of the opposite beam (2nd) to maintain symmetry.

Next, the third beam (3rd) is positioned adjacent to the first beam (1st), and the fourth beam (4th) is placed on the opposite side, adjacent to the second beam (2nd). This alternating sequence continues with the fifth beam placed adjacent to the third (3rd), and the sixth beam (6th) placed opposite to it, completing the star configuration. This method, as shown in Figure 4, ensures that the beams (2) are evenly distributed and properly aligned, providing a stable foundation for the subsequent assembly of the concrete segments (10).

Once the beams (2) are positioned, the first concrete segment (10) is lifted and placed onto the movement mechanism (3) mounted on the first beam (2). The Auxiliary lifting tool (8) is utilized to carefully lower the segment (10) onto the sliding pads (12), ensuring that the underside of the segment (10) engages smoothly with the movement mechanism (3). This initial placement is critical, as it sets the foundation for the subsequent segments.

Once the assembly stand (1) is fully constructed, the assembly process of the concrete ring (11) can begin. This process is detailed in Figures 1, 2, and 3, and involves the following steps:
With the beams (2) now in place, the concrete segments (10) are positioned onto the movement mechanisms (3) mounted on each beam (2). As previously described, the segments (10) are lifted and carefully lowered onto the said movement mechanism (3), preferably a sliding pad (12), using the Auxiliary lifting tool (8). The segments (10) are placed in a specific sequence, beginning with the first segment, followed by an adjacent segment forming a joint interface (5) between said concrete segments thereof, and so forth.

Therefore, once the concrete segments (10) are positioned by the auxiliary lifting tool (8), the movement mechanisms (3) allow for precise adjustment of the segments along the beams (2) by applying an assembly force (F) to ensure proper alignment at the joint interfaces (5). The independent movement provided by the sliding pads (12) or other movement mechanisms (3) allows the required alignment.

The force application mechanism (6) is utilized to apply the assembly force (F) inwardly towards the center of the ring (11). This force closes any gaps at the joint interfaces (5) between the concrete segments (10), ensuring a tight and secure fit. The stop element (7) ensures that the force is applied effectively, helping to secure the segments together.

After the assembly force is applied, the concrete ring (11) is securely fixed in place forming a concrete ring (10) from the multiple concrete segments. Additional steps, such as bolting or welding, may be performed depending on the requirements of the construction project.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also, elements described in association with different embodiments may be combined. It should also be noted that reference signs in the claims should not be construed as limiting the scope of the claims.

## Claims

1. An assembly stand (1) for assembling a concrete ring (11) from a plurality of concrete segments (10), the assembly stand (1) comprising:
a plurality of beams (2) configured to support the concrete segments during their assembly into the concrete ring,
a movement mechanism (3) mounted on one or of more of the plurality of beams (2), in particular mounted on all beams (2), wherein each movement mechanism (3) is configured to contact or engage with an underside of the concrete segments (10) and to allow a controlled movement of the concrete segments (10) relative to the beam (2) when an assembly force (F) is applied.

2. The assembly stand (1) of claim 1, wherein the beams (2) are arranged radially around a central axis, such that each beam (2) extends outward from the central axis forming a radial arrangement, in particular wherein the radial arrangement of the beams (2) forms a star configuration, with each beam (2) spaced equidistantly to each other.

3. The assembly stand (1) of claim 2, wherein the radial arrangement of beams (2) is configured such that the number of beams (2) corresponds to twice the number of concrete segments (10) to be assembled, with each concrete segment (10) being supported by a pair of beams (2), in particular wherein the radial arrangement comprises six beams arranged to support three concrete segments (10).

4. The assembly stand (1) of any one of claims 1 to 3, wherein the plurality of beams (2) includes a dual beam arrangement (4) positioned side by side at a joint interface (5) between adjacent concrete segments (10), each beam (2) of the dual beam arrangement (4) having a movement mechanism (3) configured to facilitate independent movement of the adjacent concrete segments (10) relative to each corresponding beam (2) for proper alignment.

5. The assembly stand any one of claims 1 to 3, further comprising a force application mechanism (6) configured to apply the assembly force (F) in such a way as to close a gap at a joint interface (5) between two adjacent concrete segments (10).

6. The assembly stand of claim 4 or 5, wherein the force application mechanism (6) is configured to exert the assembly force (F) inwardly towards the center of the concrete ring (11) being assembled, with the force application mechanism (6) being positioned on a beam (2) supporting a concrete segment (10) that is offset from the joint interface (5), such that the assembly force (F) allows the gap at the joint interface (5) to be closed

7. The assembly stand of any one of claims 4 to 6, further comprising a stop element (7) configured to be fixed or being integral to a beam (2), such that the stop element (7) is positioned to provide a reactive surface against which the force application mechanism (6), such as a bottle jack, can exert an inward assembly force (F) towards the center of the concrete ring (11) being assembled.

8. The assembly stand of any one of claims 4 to 6, wherein the force application mechanism (6) is a hydraulic, a pneumatic or a mechanical device, in particular being a bottle jack.

9. The assembly stand (1) of any one of claims 1 to 8, wherein each movement mechanism (3) comprises:
a first portion (13) configured to be connected to the beam; and
a second portion (14) configured to engage with or contact an underside of a concrete segment,
wherein the first and second portions (13,14) are configured to move relative to each other, in particular via a low-friction interface.

10. The assembly stand of any one of claims 1 to 9, wherein the movement mechanism (3) is a sliding pad (12) configured to contact the underside of the concrete segments (10), wherein each sliding pad (12) is configured to allow a controlled sliding movement of the concrete segments (10) relative to the beam (2) when an assembly force (F) is applied.

11. The assembly stand of claim 9 or 10, wherein the low-friction interface comprises surfaces (15) arranged on each portion (13,14), wherein the surfaces (15) are configured to slide with each other, in particular wherein the surfaces (15) are made of Polytetrafluoroethylene (PTFE).

12. The assembly stand of any one of claims 9 to 11, wherein the first portion (13) and the second portion (14) are configured to move relative to each other in the vertical plane through a vertical adjustment mechanism that allows a controlled vertical movement between said first and second portions (13, 14).

13. The assembly stand of any one of claims 1 to 12, wherein the beams (2) comprise a plurality of positioning points (16) for securing the corresponding movement mechanism (3) through various positions along a longitudinal axis of the beam (2), in particular the positioning points (16) being holes or slots.

14. An alignment frame (20) for positioning the plurality of beams (2) of the assembly stand (1) of any one of claims 1 to 13, the alignment frame (20) being configured to be aligned with a central axis of the concrete ring (11) to be assembled, and comprising a plurality of faces (21) arranged symmetrically around the central axis, each face (21) being configured to align with a corresponding beam (2) of the assembly stand (1), wherein the alignment frame (20) forms a polygonal shape, in particular a hexagon, octagon, or similar, further in particular wherein the alignment frame (20) is configured to be assembled from multiple pieces (22), allowing for disassembly and reassembly.

15. A method of assembling a concrete ring (11) from a plurality of concrete segments (10) using an assembly stand (1), the method comprising:
positioning a plurality of beams (2) radially extending from a central axis, each beam (2) configured to support a concrete segment during assembly,
placing each concrete segments (10) onto a respective movement mechanism (3) mounted on a beam (2),
adjusting the position of each concrete segments (10) by moving, in particular by sliding, the concrete segments (10) along the respective beam (2) to bring adjacent concrete segments (10) into alignment to form a concrete ring (11),
securing the concrete segments (10) in place, in particular the method further comprising positioning an alignment frame (20) aligned with the central axis of the concrete ring (11) to be assembled, the central frame having a plurality of faces (21) arranged symmetrically around the central axis,
each face (21) configured to align with a corresponding beam (2), in such a way that each beam (2) extends from a face (21) of the alignment frame (20).
